# EUROPEAN PATENT APPLICATION

(11) **EP 2 658 188 A1**
(43) Date of publication of application: **30.10.2013**
(21) Application number: 12165286.1
(22) Date of filing: 24.04.2012
(51) Int. Cl.: H04L 12/58

(54) **System, method and apparatus for optimizing wireless communications of secure e-mail messages with attachments**

(71) Applicant: BlackBerry Limited, Waterloo, ON N2L 3W8 (CA)
(72) Inventor: Aams, Neil Patrick, Waterloo, Ontario N2L 3W8 (CA); Singh, Ravi, Mississauga, Ontario L4W 0B5 (CA)
(74) Representative: Patel, Binesh

(57) **Abstract**

A system, method and apparatus are provided for secure e-mail message attachment optimization. Content attached to e-mail messages may not be suited to the resource constraints of the destination wireless device. In secure e-mail messages, the message may be signed and/or encrypted. A wireless server can determine resource parameters associated with a destination wireless device, such as display resolution, memory capacity, processor speed, and wireless interface constraints and re-scale the attached content to be optimized for delivery and presentation on the wireless device.

## Description

### TECHNICAL FIELD

The present disclosure relates to electronic mail (e-mail) messages and in particular to sending secure electronic e-mail message to a wireless device containing attachments.

### BACKGROUND

When e-mail messages are sent to wireless devices, or portable electronic devices, they can contain attachments providing content such as images, audio, video or documents. The content may be formatted in a manner that exceeds the capability of the wireless device or an access technology to the wireless device. For example an image may be in a resolution that exceeds the display resolution of the wireless device. Sending the original content, such as the image, to the wireless device may be a waste of resources as the additional size, or resolution may not be of benefit to the wireless device. When secure e-mail messages are sent to the wireless device, either by being signed, encrypted, or signed and encrypted with attached content, the content integrity must be maintained to ensure proper decryption and verification of the secure e-mail message.

Therefore, there is a need for an improved system and method for sending secure e-mail messages containing attached content optimized to a wireless device's capabilities.

### SUMMARY

In one aspect, the present disclosure provides a method configured to execute on a server for optimizing wireless communications of secure e-mail messages with attachments. The method comprising the steps recited in claim 1.

In another aspect, the present disclosure provides an apparatus for a server that processes e-mail messages for delivery to wireless devices as recited in claim 14.

In yet another aspect, the present disclosure provides a computer readable memory storing instructions for execution by a processor, the instructions for implementing a method according to claim 1.

Other aspects of the present disclosure will be apparent to those of ordinary skill in the art from a review of the following detailed description in conjunction with the drawings. Embodiments of the present disclosure are not limited to any particular operating system, mobile device architecture, server architecture, or computer programming language.

### BRIEF DESCRIPTION OF THE DRAWINGS

Further features and advantages of the present disclosure will become apparent from the following detailed description, taken in combination with the appended drawings, in which:
FIGURE 1 shows a representation of attached content optimization for a signed secure e-mail message;
FIGURE 2 shows a representation of attached content optimization of an encrypted secure e-mail message;
FIGURE 3 shows a method of attached content optimization of a secure e-mail message;
FIGURE 4 shows a method of attached content optimization of a signed secure e-mail message;
FIGURE 5 shows a method of attached content optimization of an encrypted secure e-mail message;
FIGURE 6 shows a representation of a display on a wireless device for receiving the secure e-mail message and optimized attached content;
FIGURE 7 shows a representation of a wireless device for receiving optimized attached content in a secure e-mail message;
FIGURE 8 shows a representation of a server for optimizing attached content of a secure e-mail message.

It will be noted that throughout the appended drawings, like features are identified by like reference numerals.

### DETAILED DESCRIPTION

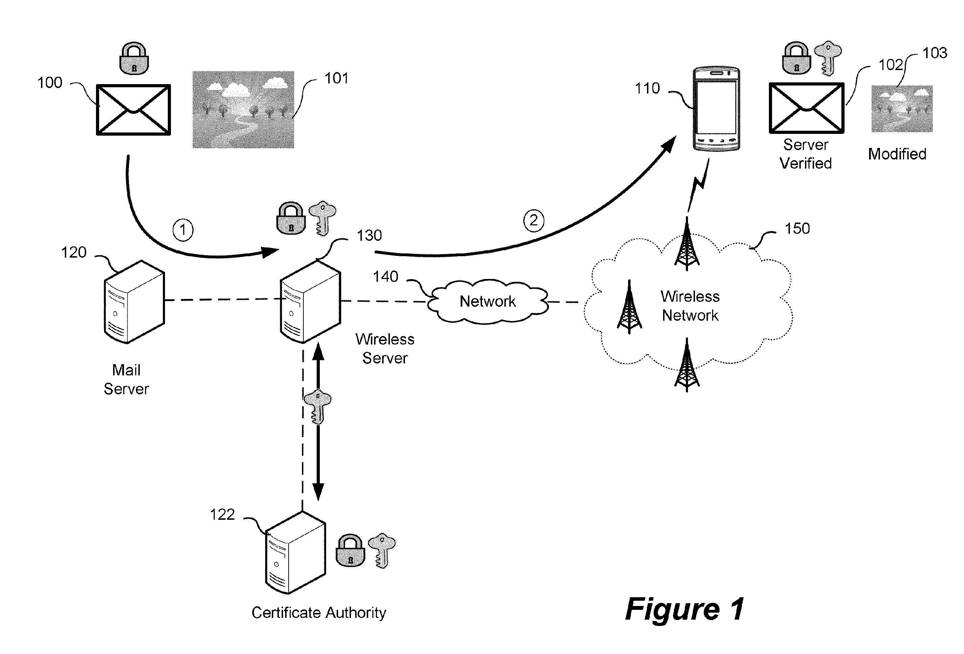

Embodiments are described below, by way of example only, with reference to Figs. 1-8. Other aspects of the present disclosure will be apparent to those of ordinary skill in the art from a review of the following detailed description in conjunction with the drawings. Embodiments of the present disclosure are not limited to any particular operating system, mobile device architecture, server architecture, or computer programming language.

In accordance with an aspect of the present disclosure there is provided a server that processes e-mail messages for delivery to wireless devices, the server comprising: a component configured for receiving a secure e-mail message directed to a wireless device; a component configured for determining a resource parameter associated with the wireless device; a component configured for re-scaling content attached to the secure e-mail message based upon the determined resource parameter; and a component configured for sending the re-scaled content to the wireless device.

In accordance with another aspect of the present disclosure there is also provided a method configured to execute on a server, the method comprising: receiving a secure e-mail message directed to a wireless device; determining a resource parameter associated with the wireless device; re-scaling attached content of the secure e-mail message based upon the determined resource parameter; and sending the re-scaled content to the wireless device.

In accordance with yet another aspect of the present disclosure there is provided a computer readable memory containing instructions for e-mail message attachment optimization, the instructions which when executed by a processor perform the method comprising: receiving a secure e-mail message directed to a wireless device; determining a resource parameter associated with the wireless device; re-scaling attached content of the secure e-mail message based upon the determined resource parameter; and sending the re-scaled content to the wireless device.

In accordance with still yet another aspect of the present disclosure there is provided a wireless device comprising: a memory containing instructions; a processor for executing the instructions contained in the memory, the instructions for performing: receiving an encrypted secure e-mail message from a server coupled to a wireless network; decrypting the secure e-mail message; determining if attached content is associated with the encrypted secure e-mail message; sending a session key extracted from the encrypted secure e-mail message to the server; and receiving the attached content from the server wherein the attached content is re-scaled by the server based upon a resource parameter of the wireless device.

In accordance with still yet another aspect of the present disclosure there is provided a method configured to execute on a wireless device, the method comprising: receiving an encrypted secure e-mail message from a server coupled to a wireless network; decrypting the secure e-mail message; determining if attached content is associated with the encrypted secure e-mail message; sending a session key extracted from the encrypted secure e-mail message to the server; and receiving the attached content from the server wherein the attached content is re-scaled by the server based upon a resource parameter of the wireless device.

In accordance with still yet another aspect of the present disclosure there is provided a computer readable memory containing instructions for e-mail message attachment optimization, the instruction when executed by a processor perform the method comprising: receiving an encrypted secure e-mail message from a server coupled to a wireless network; decrypting the secure e-mail message; determining if attached content is associated with the encrypted secure e-mail message; sending a session key extracted from the encrypted secure e-mail message to the server; and receiving the attached content from the server wherein the attached content is re-scaled by the server based upon a resource parameter of the wireless device.

Figure 1 shows a representation of attached content optimization for a signed secure e-mail message. An e-mail message 100 has attached image content 101 which is delivered to a mail server 120 (1) and is identified to a wireless server 130. The attached content (or may be referred to as an attachment) may be any file type such as media files, documents, executable files, or compressed files that are supported for embedding in the e-mail message. The e-mail message may use the standard representation known as Multipurpose Internet Mail Extensions (MIME) protocol which is an Internet standard that extends the format of e-mail message. MIME supports text in character sets other than ASCII, non-text attachments, message bodies with multiple parts, and header information in non-ASCII character sets. A secure e-mail message utilizes a security layer such as S/MIME (Secure/Multipurpose Internet Mail Extensions) protocol which is a standard for public key encryption and signing of MIME data. In this example the e-mail message is a signed secure e-mail message such as provided by S/MIME. In a signed secure e-mail message 100 the sender has added an encrypted signature to the message which can be used to authenticate the identity of the sender of the e-mail message. The receiver of the secure e-mail message 100, wireless device 110, can download a public key associated with the sender and verify the credentials to verify the origins of the secure e-mail message 100. The body of the e-mail message 100 or attachments are not necessarily encrypted in a signed secure e-mail message and can be inspected by the wireless server 130.

The wireless server 130 receives the messages 100 from the mail server 120 and scans the e-mail message 100 for attached content 101. If the attached content 101 can be optimized by re-scaling or reformatting, the wireless server 130 will verify the signature of the sender by retrieving a sender certificate from a certificate authority 122 or a key stored locally or network accessible. The attached content 101 can then be re-scaled based upon resource parameters of the wireless device, such as display size, memory capacity, wireless resources, and processing power. The parameters may be previously determined and stored at the wireless server 130, may be retrieved from a configuration server, or a query may be performed from the wireless server 130 to the target wireless device 110 to determine device resources or limitations. Once the attached content 101 is modified 103, the receiving device 110 can not perform verification of the e-mail message 103 as the package of the original secure e-mail message 100 will no longer be consistent with the signature. The wireless server 130 must therefore perform verification of the secure e-mail message 102 and the modified attached content 103. The e-mail message header, a custom field or a standard field, is marked as being verified by the server 130 and that content 103 has been modified, and therefore is not the original attached content. The modified e-mail message 102 and attached content 103 is then forwarded (2) to the wireless device 110 through an intermediary network 140, or directly to the wireless network 150 if the wireless server 130 resides in the wireless server provider infrastructure. The e-mail message 102 is displayed on the device 110 with an indication that the message has been server verified and that the content 103 has been modified. The wireless device 110 can then extract the modified image 103 for display. In present representation the wireless server 130 and mail server 120 are depicted as being separate entities, however, they may be a single server and reside on the same device and/or be incorporated or integrated into the same application as required, however for simplicity the term wireless sever is used throughout the disclosure. It should be noted that recipients of the e-mail message 100 may not necessarily be coupled to the wireless network 150 but can be any device capable of receiving an e-mail message.

In the case of encrypted secure e-mail messages, the wireless server 130 typically is unable to decrypt the contents of the message to scan for the attachment headers as it does not have appropriate decryption keys as only the receiver is able to decrypt any messages. In certain scenarios the decryption key may be available to the wireless server 130, such as for malware scanning, however this may only be used for network level encryption, rather than end-user encryption. In wireless e-mail delivery systems the e-mail message may be delivered in portions to the device on an as needed basis.

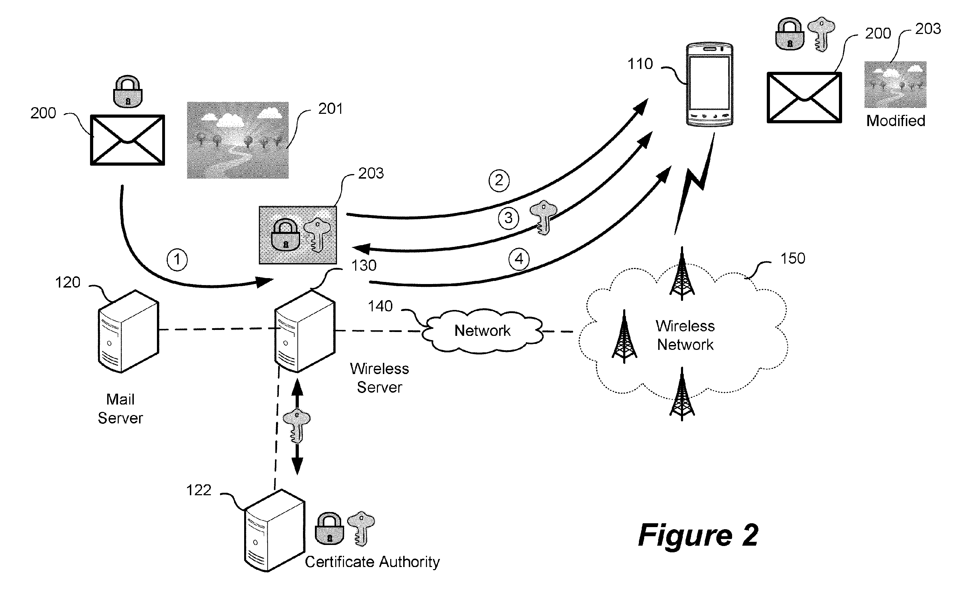

In an encrypted secure e-mail message scenario, as the wireless device must perform the decryption of the header of the e-mail message to retrieve session keys, the wireless server cannot directly modify the attached content before the message is sent to the wireless device. However, in the LEMONADE e-mail message profile, enhancements to Internet e-mail messages to Support Diverse Service Environments, defined by the Internet Engineering Task Force (IETF) in RFC 2550, e-mail messages may be sent to a mobile device without being downloaded to the mobile device to conserve bandwidth and device resources. The attachments may not be downloaded or viewed by the user unless the entire message is received by the wireless device. In order to enable optimization of the attachments, the wireless device can determine if attached content is present in the e-mail message as portions are downloaded, and before downloading the complete attachment request that the server optimize the attachments as described in Figure 2.

Figure 2 shows a representation of attached content optimization of an encrypted secure e-mail message. The encrypted e-mail message 200 is provided (1) to the wireless server 130 from a mail server 120. For encrypted e-mail messages 200 content attachments, for example an image 201, are embedded within S/MIME body and are not available until the portion of the e-mail message containing the respective attachment is downloaded (2) to the wireless device 110. To enable optimization of the attachments the wireless device 110 uses a private key to decrypt the message header to retrieve the session key (3) which is sent to the wireless server when it identifies that additional portions of the e-mail message may contain content attachments. The wireless server can then use the session key to decrypt the attached content from the message body. In this manner the wireless device 110 only downloads the portions of the encrypted secure e-mail message 200 required to determine if content 201 is attached and can conserve resources by allowing the wireless server 130 to optimize the attached content 203 before downloading the rest of the message 200. The wireless device 110 may also retrieve a sender certificate from certificate authority 122 to verify the sender of the e-mail message during the decryption process.

As attachments are received in a serial manner based upon their position within the body text of the e-mail message, the wireless device 110 must therefore notify the wireless server 130 of the presence of attached content and provide the appropriate session decryption key. Once the wireless server 130 has the session key it can decrypt the attachments and determine if the content 201 of the attachment can be re-scaled to match or conserve resources on the wireless device 110. The re-scaled content 203 is then sent (4) to the wireless device 110 from the wireless server 130. The re-scaled content 203 may be re-encrypted using a public encryption key of the wireless device 110 or session based encryption if required before sending the attachments. The wireless device 110 would identify that the encrypted content was modified by the server however the security and/or signature was verified by the wireless device.

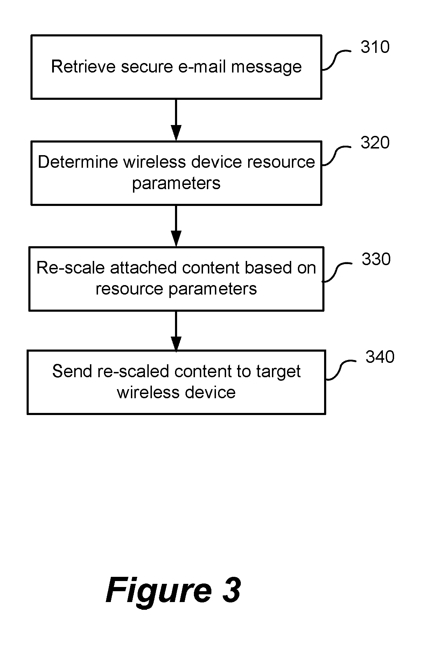

Figure 3 shows a method of attached content optimization of a secure e-mail message. The method starts by receiving a secure e-mail message at a wireless server (310) from a mail server either locally or connected through a network. The wireless server determines the resource parameters of the target wireless device of the e-mail message (320). The resource parameters may be retrieved from a database defining configuration or preferences associated with the wireless device or through a query mechanism with the wireless device, or selected by a user of the wireless device. The resource parameters may be defined by one or more constraints of the device such as display size, memory capacity, network interface capacity, or processor speed. The content attached to the e-mail message can then be re-scaled (330) to be optimized target wireless device to reduce the size of the attached content. The attached content is then sent to the wireless device (340).

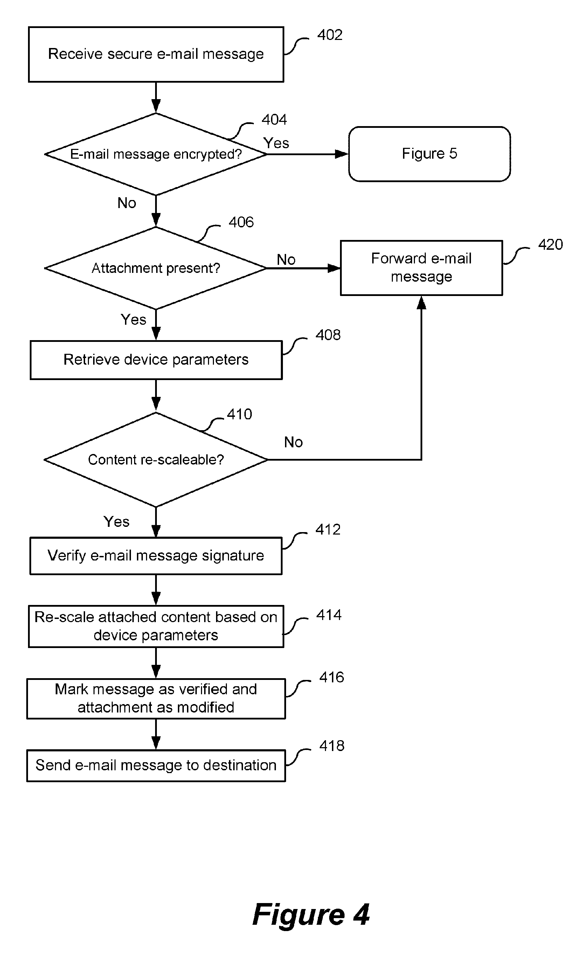

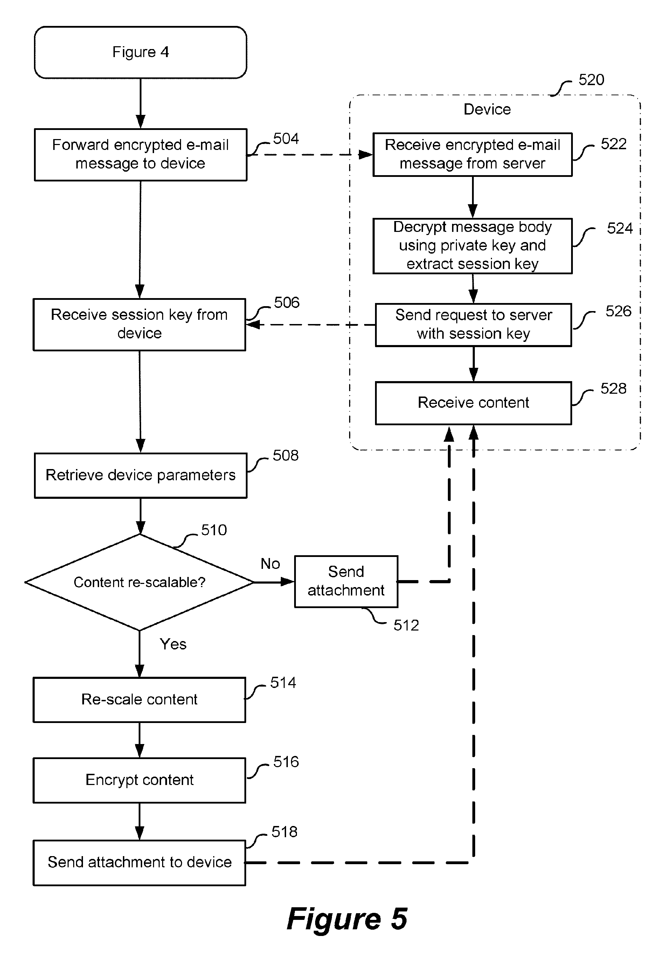

Figure 4 shows a method of attached content optimization of a signed secure e-mail message. The secure e-mail message is received at the wireless server (402). If the e-mail message is encrypted (YES at 404) the method continues as described in Figure 5 presented in relation to an encrypted secure e-mail message. If the e-mail message is not encrypted (NO at 404) it is assumed, or previously determined, that the e-mail message is a signed secure e-mail message. It is then determined if the signed e-mail message contains attached content. If there is attached content (YES at 406), the resource parameters associated with the wireless device is determined (408). It is then determined if the content is re-scalable content (YES at 410) relative to the defined resource parameters, for example, does the content exceed the determined resource parameters of the wireless device but can be re-scaled based on known device resource parameters of the wireless device. The signature on the secure e-mail message is verified (412) by confirming the sender identity and the original content. The content is then re-scaled based upon the resource parameters (414). For example an image may be re-scaled to a lower resolution, a PDF may be optimized to reduce its file size, a video or audio file may be down-sampled or transcoded to another format to be optimized to the wireless device. The e-mail message is then marked as verified and the content as modified using a field in the e-mail header (416) before being sent to the destination wireless device (418). If the e-mail message does not contain attached content (NO at 406) or is not re-scalable (NO at 410) it will be forwarded directly to the wireless device (420) and not modified. However, the wireless server may verify the e-mail message if server side verification is required.

Figure 5 shows a method of attachment optimization of an encrypted secure e-mail message. When an encrypted e-mail message is received at the wireless server it is forwarded directly to the wireless device (504). The message is sent in portions to the wireless device which executes a method flow 520. The wireless device (522) receives the header portion of the e-mail and decrypts the header using an associated private key and extracts a session key from the message (524). The wireless device may also verify a sender signature of the secure e-mail message or request that the server verify the sender. If the wireless device identifies that an attachment is present in the e-mail message, when it receives an attachment identifier in an associated downloaded portion, but has not received all the portions of the e-mail message, a request identifying the message is sent to the wireless server including the extracted session key (526). The request may also identify a portion identifier or attachment identifier so that the wireless server may locate the content to be optimized. The wireless server receives identification of the e-mail message from the wireless device that has attached content and a session key from the wireless device (506). The resource parameters associated with the wireless device are determined (508). If it is determined that the content is re-scalable content relative to the defined resource parameters (YES at 510), the content is re-scaled (514) to be optimized for the wireless device. The content may then be re-encrypted (516) and sent to the wireless device (518). The wireless device may identify that the content has been modified, and may provide the user with the ability to download the unmodified content if required. The encrypted content is then received by the wireless device (528) and added the e-mail message. If it was determined that the content is not re-scalable (NO at 510) the attached content is sent to the wireless device and is not modified (512).

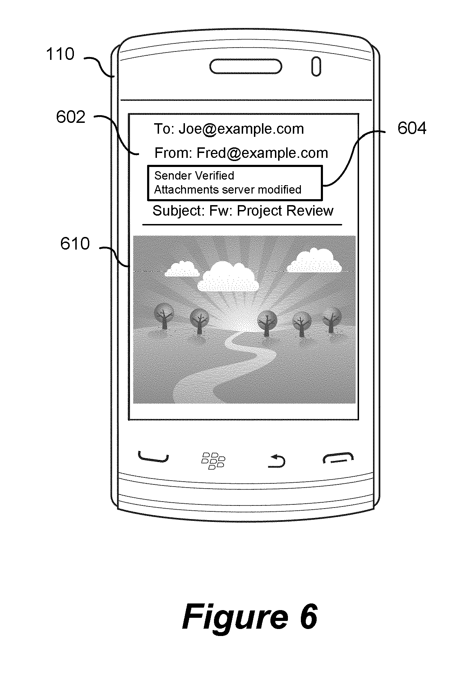

Figure 6 shows a representation of a display on a wireless device 110 for receiving the secure e-mail message and optimized attachments. The presentation of the e-mail message 602 having optimized attached content 610 may provide an indicator 604 to identify to the user that the sender of the message has been verified by the wireless server and that attachments have been modified by the server. Similarly the indicator 604 may show that the secure e-mail message was encrypted and the verification was performed by the wireless device 110 and the attached content was modified by the server. The user may also be provided with an option to download the original attached content if necessary. During the process of retrieving a secure e-mail message the wireless device 110 may present the user with an option to request attached content optimization or by-pass optimization and download the attached content without modification.

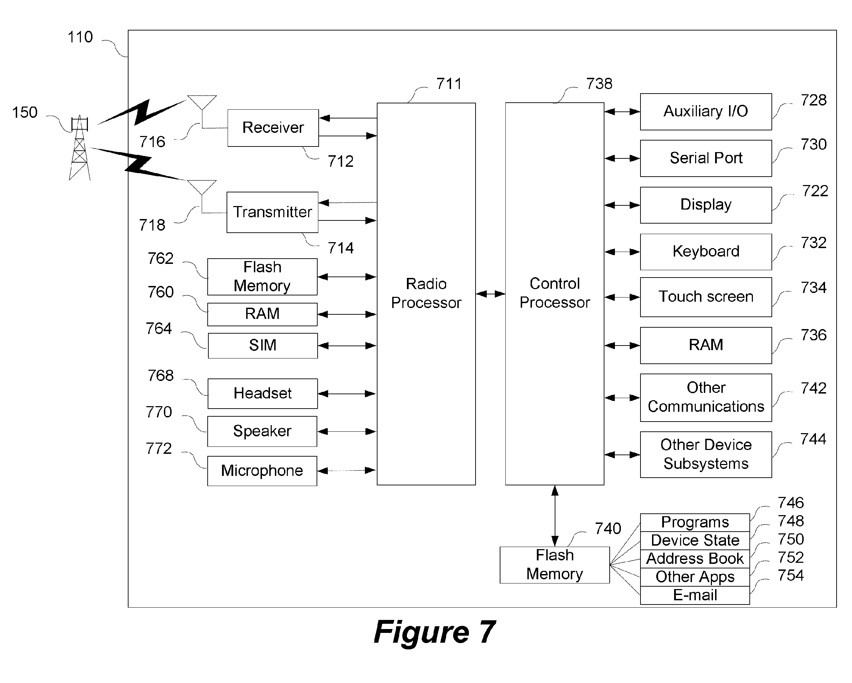

Figure 7 is a block diagram of a wireless device for replying/forwarding of e-mail, in particular a wireless device 110 is shown incorporating a communication subsystem having both a receiver 712 and a transmitter 714 as well as associated components such as one or more embedded or internal antenna elements 716 and 718. The particular design of the communication subsystem will be dependent upon the communication network in which the device is intended to operate.

When required network registration or activation procedures have been completed, wireless device 110 may send and receive communication signals over a wireless network 150. Signals received by antenna 716 are input to receiver 712, which may perform such common receiver functions as signal amplification, frequency down conversion, channel selection and the like. Radio processor 711 interacts with receiver 712 and transmitter 714, and further with flash memory 762, random access memory (RAM) 760, the subscriber identity module 764, a headset 768, a speaker 770, and a microphone 772.

Control processor 738 interacts with further device subsystems such as the display 722, flash memory 740, random access memory (RAM) 736, auxiliary input/output (I/O) subsystems 728, serial port 730, keyboard 732, input devices such as a touch-sensitive display or touch input device 734, other communications 742 and other device subsystems generally designated as 744.

Some of the subsystems shown in Figure 7 perform communication-related functions, whereas other subsystems may provide "resident" or on-device functions. Notably, some subsystems, such as keyboard 732 and display 722, for example, may be used for both communication-related functions, such as entering a text message for transmission over a communication network, and device-resident functions such as a calculator or task list. Additionally certain components may be combined, for example, the keyboard 732 and the display 722 may be combined as a single component such as a touch-sensitive display.

Software used by radio processor 711 and control processor 738 is stored in a persistent store such as flash memory 740 and 762, which may instead be a read-only memory (ROM) or similar storage element (not shown). Those skilled in the art will appreciate that the operating system, specific device applications, or parts thereof, may be temporarily loaded into a volatile memory such as RAM 736 and RAM 760. Received communication signals may also be stored in RAM 736.

As shown, flash memory 740 can be segregated into different areas for computer programs 746, device state 748, address book 750, other applications 752 and e-mail programs 754. These different storage types indicate that each program can allocate a portion of flash memory 740 for their own data storage requirements. Microprocessor 738, in addition to its operating system functions, preferably enables execution of software applications on the wireless device

For voice communications, overall operation of wireless device 110 is similar, except that received signals would preferably be output to the speaker 770 or headset 768 and signals for transmission would be generated by the microphone 772. Alternative voice or audio I/O subsystems, such as a voice message recording subsystem, may also be implemented on wireless device 110.

Other device subsystems 744, such as a short-range communications subsystem, is a further optional component which may provide for communication between wireless device 700 and different systems or devices, which need not necessarily be similar devices. For example, the subsystem 744 may include an infrared device and associated circuits and components or a Bluetooth™ communication module to provide for communication with similarly enabled systems and devices.

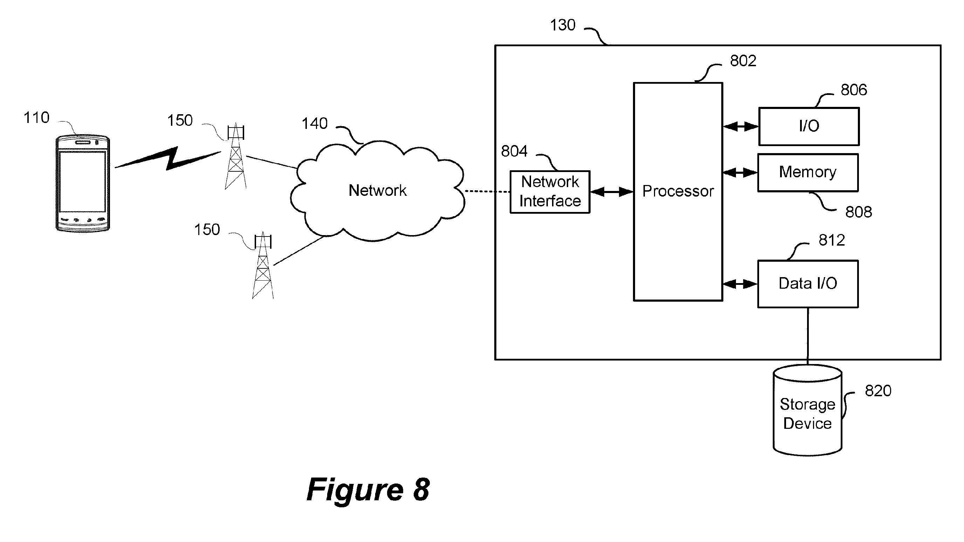

Figure 8 shows a representation of a server for optimizing attachments of a secure e-mail message. The wireless server 130 may be a wireless server, a mail server, or a combination therein. The wireless server has one or more processors 802 coupled to a network interface 804. The server communicates with the wireless device 110 through a wireless network 150, which may be directly coupled or coupled indirectly through network 140. The processor has memory 808 for executing instructions for optimizing attached content and a data input/output interface 812 for retrieving instructions and stored device resource parameters in storage device 820, either directly coupled or remotely accessible. The wireless server 130 may include mail processing functions or be used in combination with a mail server 120 coupled to the network. The wireless server 130 may be controllable or configurable through an I/O interface 806 providing direct user input or remotely controllable. The wireless server 130 functions may be resident in a single function in a distributed computing environment which would cooperatively provide similar functions.

The system and methods according to the present disclosure may be implemented by any hardware, software or a combination of hardware and software having the above described functions. The software code, either in its entirety or a part thereof, may be stored in a computer-readable memory. Further, a computer data program representing the software code may be embodied on a computer-readable memory.

While particular embodiments of the present system and methods have been described herein, it will be appreciated by those skilled in the art that changes and modifications may be made thereto without departing from the disclosure in its broadest aspects and as set forth in the following claims.

## Claims

1. A method configured to execute on a server (130), the method comprising:
receiving (310) a secure e-mail message directed to a wireless device (110);
determining (320) a resource parameter associated with the wireless device (110);
re-scaling (330) attached content (101) of the secure e-mail message based
upon the determined resource parameter; and
sending (340) the re-scaled content (103) to the wireless device (110).

2. The method of claim 1 further comprising:
determining whether the secure e-mail message includes attached content;
and
verifying a signature of a sender of the secure e-mail message if the
message contains attached content.

3. The method of claim 1 or 2 wherein sending the re-scaled content marks the secure e-mail message as being modified and verified prior to sending the re-scaled content in the e-mail message to the wireless device.

4. The method of any one of claims 1 to 3 wherein the marking is embedded in the header of the modified e-mail message.

5. The method of claim 1 further comprising:
receiving a session key from the wireless device; and
decrypting the encrypted content attached to the secure e-mail message
using the session key prior to re-scaling the content.

6. The method of claim 5 wherein sending the re-scaled content further encrypts the content prior to sending it to the device.

7. The method of claim 1 further comprising:
receiving a session key from a storage device; and
decrypting the encrypted content attached to the secure e-mail message
using the session key prior to re-scaling the content;
re-encrypting the content using a public key associated with the wireless
device.

8. The method of any one of claims 1 to 7 wherein the resource parameter is a display resolution of the wireless device and the content is an image that is scaled to the display resolution of the wireless device.

9. The method of any one of claims 1 to 7 wherein the resource parameter is selected from one or more resources of the wireless device selected from the group consisting of: a display resolution of the wireless device, a memory capacity of the wireless device, a wireless interface speed of the wireless device, and a processor speed of the wireless device.

10. The method of claim 9 wherein the resource parameter of the wireless device is determined from configuration data associated with the wireless device stored at the server or retrieved by the server.

11. The method of claim 9 wherein one or more of the resource parameters of the wireless device is sent from the wireless device to the server.

12. The method of any one of claims 1 to 11 wherein the secure e-mail message has an S/MIME signature and/or S/MIME encryption.

13. The method of any one of claims 1 to 12 further comprising verifying a signature of a sender of the encrypted secure e-mail message if the message contains attached content.

14. A server (130) that processes e-mail messages (100) for delivery to a wireless device (110), the server (130) executing the method of claims 1 to 13.

15. A computer readable memory containing instructions for e-mail message attachment optimization, the instructions which when executed by a processor perform the method comprising claim 1 to 13.

## Amended claims

### Amended claims in accordance with Rule 137(2) EPC.

**1.** A method configured to execute on a server (130), the method comprising:
receiving (310) a secure e-mail message directed to a wireless device (110);
determining (320) a resource parameter associated with the wireless device (110);
re-scaling (330) attached content (101) of the secure e-mail message based upon the determined resource parameter; and
sending (340) the re-scaled content (103) to the wireless device (110).

**2.** The method of claim 1 further comprising:
determining whether the secure e-mail message includes attached content; and
verifying a signature of a sender of the secure e-mail message if the message contains attached content.

**3.** The method of claim 1 or 2 wherein sending the re-scaled content marks the secure e-mail message as being modified and verified prior to sending the re-scaled content in the e-mail message to the wireless device.

**4.** The method of any one of claims 1 to 3 wherein the marking is embedded in the header of the modified e-mail message.

**5.** The method of claim 1 further comprising:
receiving a session key from the wireless device; and
decrypting the encrypted content attached to the secure e-mail message using the session key prior to re-scaling the content.

**6.** The method of claim 5 wherein sending the re-scaled content further encrypts the content prior to sending it to the device.

**7.** The method of claim 1 further comprising:
retrieving a session key from a storage device; and
decrypting the encrypted content attached to the secure e-mail message using the session key prior to re-scaling the content;
re-encrypting the content using a public key associated with the wireless device.

**8.** The method of any one of claims 1 to 7 wherein the resource parameter is a display resolution of the wireless device and the content is an image that is scaled to the display resolution of the wireless device.

**9.** The method of any one of claims 1 to 7 wherein the resource parameter is selected from one or more resources of the wireless device selected from the group consisting of: a display resolution of the wireless device, a memory capacity of the wireless device, a wireless interface speed of the wireless device, and a processor speed of the wireless device.

**10.** The method of claim 9 wherein the resource parameter of the wireless device is determined from configuration data associated with the wireless device stored at the server or retrieved by the server.

**11.** The method of claim 9 wherein one or more of the resource parameters of the wireless device is sent from the wireless device to the server.

**12.** The method of any one of claims 1 to 11 wherein the secure e-mail message has an S/MIME signature and/or S/MIME encryption.

**13.** The method of any one of claims 1 to 12 further comprising verifying a signature of a sender of the encrypted secure e-mail message if the message contains attached content.

**14.** A server (130) that processes e-mail messages (100) for delivery to a wireless device (110), the server (130) executing the method of claims 1 to 13.

**15.** A computer readable memory containing instructions for e-mail message attachment optimization, the instructions which when executed by a processor perform the method comprising claim 1 to 13.
